# EUROPÄISCHE PATENTSCHRIFT

(11) **EP 2 386 403 B1**
(45) Veröffentlichungstag und Bekanntmachung des Hinweises auf die Patenterteilung: **25.06.2014**
(21) Anmeldenummer: 11163213.9
(22) Anmeldetag: 20.04.2011
(51) Int. Cl.: B29C 49/42, B29C 49/64, B29C 49/68

(54) **Heizstrecke und Handhabungsvorrichtung für Vorformlinge**
Heating tunnel and handling device for preforms
Parcours de chauffage et dispositif de manipulation pour préformes

(30) Priorität: 10.05.2010 DE 102010020092
(43) Veröffentlichungstag der Anmeldung: 16.11.2011
(60) Teilanmeldung: 14168847.3
(73) Patentinhaber: Krones AG, 93073 Neutraubling (DE)
(72) Erfinder: Winzinger, Frank, 93073 Neutraubling (DE); Holzer, Christian, 93073 Neutraubling (DE); Schönberger, Wolfgang, 93073 Neutraubling (DE)
(74) Vertreter: Benninger, Johannes

(56) Entgegenhaltungen:
- WO-A1-2004/007170
- DE-A1-102007 040 620
- DE-A1-102008 015 169
- FR-A1- 2 890 061
- JP-A- 2 034 321
- US-A- 4 116 325

## Beschreibung

Die vorliegende Erfindung betrifft eine Heizstrecke mit mindestens einer Handhabungsvorrichtung zur Halterung von Vorformlingen beim Durchlaufen der Heizstrecke, wobei die Vorformlinge einen oberen offenen Mündungsbereich und ein Außengewinde sowie einen unteren geschlossenen Bodenbereich aufweisen, wobei unterhalb des Außengewindes ein Tragring angeordnet ist, und wobei die Handhabungsvorrichtung mindestens ein Haltemittel umfasst, das zumindest teilweise reibschlüssig in den Mündungsbereich der Vorformlinge eingreift, wobei des Handhabungsvorrichtung wenigtens eine mit dem Vorformling in Kontakt bringbare Sicherheitseinrichtung zugeordnet ist, vgl. die US-A-4116325.

Bei der Herstellung von Kunststoffflaschen werden so genannte Vorformlinge aus thermoplastischem Material, beispielsweise PET, verwendet. Diese werden erwärmt und in Streckblasmaschinen in eine gewünschte Behälterform gebracht. Insbesondere werden die Vorformlinge in einer Förderstrecke durch eine Heizeinrichtung mittels einer Haltevorrichtung gefördert, ehe sie in der Blasstation verarbeitet werden.

Jeder Vorformling ist bereits mit einem oben offenen Mündungsbereich sowie in der Regel mit einem am Mündungsbereich angebrachten Außengewinde ausgebildet. Dieser Mündungsbereich entspricht im Wesentlichen dem Mündungsbereich der fertigen Flasche. Die Vorformlinge sind üblicherweise Spritzgussteile, die in der Heizeinrichtung auf die benötigte Umformtemperatur und anschließend in der Blasvorrichtung in die endgültige Form der Behälter beziehungsweise Flaschen gebracht werden. Beim derzeitigen Standard-Prozess werden die Vorformlinge im Heizmodul von einer Spindel oder einem Dorn gehalten, die drehbar in einem Kettenglied gelagert sind. Die Spindel beziehungsweise der Dorn greift reibschlüssig in den oben offenen Mündungsbereich des Vorformlings und fixiert diesen. Im Heizmodul werden mehrere Kettenglieder mit den darin gelagerten Spindeln verbunden und bilden eine endlos umlaufende Kette.

An der außenliegenden Seite der geraden Längsseiten des Heizmoduls befinden sich die in Heizkästen angeordneten Heizeinrichtungen, die dem Vorformling mittels IR-Strahlung Wärme zuführen. An der Innenseite und am Boden der Heizkästen sind normalerweise Reflektoren angebracht, um die ausgestrahlte IR-Strahlung möglichst gut auszunutzen und in gewünschter Weise auf die zu erwärmenden Vorformlinge umzulenken.

Weiterhin wird der Mündungsbereich der Vorformlinge bei den meisten bekannten Anlagen durch einen Luftstrom vor zu großer Erwärmung geschützt. Dies ist notwendig, da bei zu großer Erwärmung der Mündungsbereich der Vorformlinge im nachfolgenden Blasformverfahren deformiert werden könnte, wodurch die dabei entstehenden Behälter als fehlerhaft ausgesondert werden müssten. Um den Mündungsbereich der Vorformlinge zu schützen, kommt beispielsweise eine zumindest teilweise bündig zur Unterseite des Tragrings des Vorformlings angeordnete Abschirmplatte zur Anwendung. Diese Abschirmplatte kann reflektierend ausgebildet sein und verhindert, dass die gesamte Strahlerwärme auf den Mündungsbereich beziehungsweise auf das Außengewinde des Vorformlings trifft. Herkömmlicherweise weist eine solche Abschirmplatte reflektierende Eigenschaften auf, kann aber ggf. auch Strahlungsanteile absorbieren.

Da die Vorformlinge hängend über Reibschluss durch die Heizstrecke transportiert werden, besteht die Gefahr, dass sich die reibschlüssige hängende Halterung der Vorformlinge während ihres Transports durch die Heizstrecke lockert und die Vorformlinge von der Halterung lösen.

Das Ziel der vorliegenden Erfindung ist deshalb, eine verbesserte Heizstrecke für die Vorformlinge vorzuschlagen, bei welchen die Vorformlinge während des Transports verliersicher aufgebracht werden beziehungsweise gehalten und integriert sind, so dass ein Verlieren der Vorformlinge in der Heizstrecke weitestgehend vermieden werden kann.

Das Ziel der Erfindung wird durch eine Sicherungseinrichtung erreicht, welche die Merkmale des Patentanspruchs 1 umfasst. Weitere vorteilhafte Ausgestaltungen werden durch die Unteransprüche beschrieben.

Die Erfindung betrifft eine Heizstrecke beziehungsweise einen Ofen zur Erwärmung von Vorformlingen zur weiteren Verarbeitung in einer Streckblasvorrichtung. Die Heizstrecke umfasst mindestens eine Handhabungsvorrichtung zur Halterung von Vorformlingen beim Durchlaufen der Heizstrecke. Die Handhabungsvorrichtung weist Transportmittel auf, die für die Bewegung der Vorformlinge entlang einer Transportstrecke notwendig sind. Es kann zusätzlich vorgesehen sein, dass die Vorformlinge während ihres Transports um ihre Längsachse rotieren, um eine gleichmäßige Erwärmung sicherzustellen. Auf mindestens einer Seite der Heizgasse befinden sich IR-Strahler. Durch den rotierenden Transport der Vorformlinge durch die Heizgasse hindurch wird gewährleistet, dass die Vorformlinge in ihrem gesamten Umfang gleichmäßig mittels der Strahlungswärme erwärmt werden. Die Vorformlinge weisen einen oberen offenen Mündungsbereich und ein Außengewinde sowie einen unteren geschlossenen Bodenbereich auf. Alternativ können die Vorformlinge auch einen offenen Bodenbereich aufweisen. Unterhalb des Außengewindes weisen die Vorformlinge einen Tragring auf, der auch nach dem Blasformen unverändert erhalten bleiben muss, um die fertig geformten Behälter halten und handhaben zu können. Die Handhabungsvorrichtung beziehungsweise die Transportmittel umfassen mindestens ein Haltemittel, das zumindest teilweise reibschlüssig in den eben genannten Mündungsbereich der Vorformlinge eingreift.

Die Sicherungseinrichtung weist einen zwischen einer Sicherungslage und einer Entsicherungslage mechanisch, pneumatisch, magnetisch oder elektromagnetisch verstellbaren Sicherungsriegel auf, wobei der Sicherungsriegel in der Sicherungslage den Tragring zumindest teilweise untergreift.

Der Sicherungsriegel kann ein festes Blech mit Drehlagerung oder ein gerades Blech mit am unteren Ende senkrecht befestigten stiftförmigen Körpern sein. Insbesondere besteht er aus einem vorgespannten L-förmigen Federblech, dessen vertikaler, federelastischer Bereich am unteren Ende einen horizontalen Sicherungsabschnitt trägt. Dieser horizontale Sicherungsabschnitt untergreift den Tragring in der Regel berührungslos auf der Höhe eines Segments der Außenmantelfläche des Vorformlings. Eine Berührung zwischen dem Vorformling und dem Sicherungsriegel findet dann statt, wenn der Vorformling nicht korrekt am Dorn aufgenommen wurde und vom Dorn rutscht. Ein Abfallen wird somit durch den Sicherungsriegel verhindert.

Die Ruheposition des Sicherungsriegels befindet sich bevorzugt in der Sicherungslage. Von dort kann dieser unter Einwirkung eines Betätigungselements in die vom Vorformling beabstandete Entsicherungslage bewegt werden, um den Vorformling aufzunehmen beziehungsweise an den Transferstern zu übergeben. Unter Ruheposition ist die Position zu verstehen, die der Sicherungsriegel automatisch, d. h. ohne Einwirkung des Betätigungselements, einnimmt.

Bei einer alternativen Ausführungsvariante ist es möglich, dass die Entsicherungslage des Sicherungsriegels seine Ruheposition darstellt, während der Sicherungsriegel unter Einwirkung des Betätigungselements in die Sicherungslage gebracht wird und den Vorformling somit in der Regel berührungslos untergreift.

Um den Sicherungsriegel in die entsprechende Lage zu bringen, ist mindestens ein mechanisches, pneumatisches, magnetisches oder elektromagnetisches Betätigungselement notwendig. Der Sicherungsriegel wird über das mindestens eine Betätigungselement an den Vorformling zustellbar oder abhebbar angebracht, wobei das Betätigungselement vorzugsweise dem vertikalen Bereich des Sicherungsriegels zugeordnet beziehungsweise an diesem angeordnet ist.

Weiterhin kann das Betätigungselement durch eine, mit einer Kurvenscheibe zusammenwirkende Kurvenrolle gebildet sein. Die gewünschte Bewegung des Sicherungsriegels von der Sicherungslage in die Entsicherungslage kann auch durch das Zusammentreffen eines am Sicherungsriegel angebrachten Permanent- oder Elektromagneten mit einem weiteren Permanentmagneten, einem Eisenkern oder einem sonstigen magnetischen Material erzeugt werden.

Bei einer weiteren Ausführungsform ist ein Betätigungselement nicht notwendig. Stattdessen kann eine Luftdüse auf der Seite des Sicherungsriegels, auf der sich die Spindel befindet, angebracht sein, um den Sicherungsriegel pneumatisch in die Entsicherungslage zu drücken. Wahlweise kann auf der anderen Seite des Sicherungsriegels ein Vakuum erzeugt werden, das den Sicherungsriegel aus der Sicherungslage in die Entsicherungslage zieht.

Bei den Übergaben der Vorformlinge, beispielsweise vom Sägezahnstern zur Heizstrecke, wird das Haltemittel, das als sogenannte Spindel ausgebildet sein kann, über eine Zwangsführung nach unten gedrückt und taucht somit durch eine Öffnung in einer Abschirmplatte, um von innen zumindest reibschlüssig in die Mündung des Vorformlings einzugreifen, so dass dieser aus dem Sägezahnstern entnommen werden kann. Bei ungünstigen Toleranzen oder einer unzureichenden Klemmung zwischen Vorformling und Haltemittel kann es bei dieser Anordnung zu einem Herabfallen des Vorformlings kommen. Dieser würde somit in die Heizgasse fallen und dort evtl. zu Beschädigungen führen.

Wie schon erwähnt, greift das Haltemittel am Beginn der Heizstrecke von innen in die Mündung des Vorformlings ein, um diesen aus dem Sägezahnstern zu entnehmen beziehungsweise um die Vorformlinge am Ende der Heizstrecke von Klammern zu entnehmen. In diesen Bereichen muss die Sicherungseinrichtung zur Ermöglichung der Auf- beziehungsweise Entnahme der Vorformlinge in geeigneter Weise in die Entsicherungslage bewegt werden.

Dies erfolgt vorzugsweise über eine Kurvenrolie, die auf der Sicherungseinrichtung befestigt ist und über ein passendes Kurvenstück so geführt wird, dass sich die Sicherungseinrichtung öffnet und die Vorformlinge freigibt. Ebenfalls muss für die Aufnahme der Vorformlinge die Sicherungseinrichtung geöffnet werden, um die Vorformlinge von unten nach oben durch die Abschirmplatte befördern zu können.

Die Erfindung betrifft weiter eine Handhabungsvorrichtung zur Halterung von Vorformlingen beim Durchlaufen einer Heizstrecke, wobei der Handhabungsvorrichtung wenigstens eine Sicherungseinrichtung zugeordnet ist, die den Tragring des Vorformlings in der Regel berührungslos untergreift. Die Ausgestaltung dieser Sicherungseinrichtung kann einer der zuvor beschriebenen Ausführungsvarianten entsprechen.

Die Erfindung ist grundsätzlich zur Anwendung in Mikrowellenöfen, Rundläuferöfen, Linearöfen, stationären Öfen etc. geeignet. Weiterhin ist die Verwendung von individuellen Heiztaschen oder Resonatoren denkbar, wobei jeder Vorformling in einer separaten Heiztasche selektiv temperiert wird.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Ansicht einer Heizstrecke (Stand der Technik).
Figur 2a zeigt eine Perspektivansicht einer Handhabungsvorrichtung für einen Vorformling (Stand der Technik).
Figur 2b zeigt einen Querschnitt durch die Handhabungsvorrichtung für einen Vorformling entlang einer Schnittlinie A-A aus der Figur 2a (Stand der Technik).
Figur 3 zeigt eine Perspektivansicht einer Handhabungsvorrichtung für einen Vorformling mit einer Sicherungseinrichtung.
Figur 4a zeigt eine Perspektivansicht der Handhabungsvorrichtung für einen Vorformling mit einer Sicherungseinrichtung in einer Sicherungslage.
Figur 4b zeigt eine Perspektivansicht der Handhabungsvorrichtung für einen Vorformling mit einer Sicherungseinrichtung in einer Entsicherungslage.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung sein kann und stellen keine abschließende Begrenzung dar.

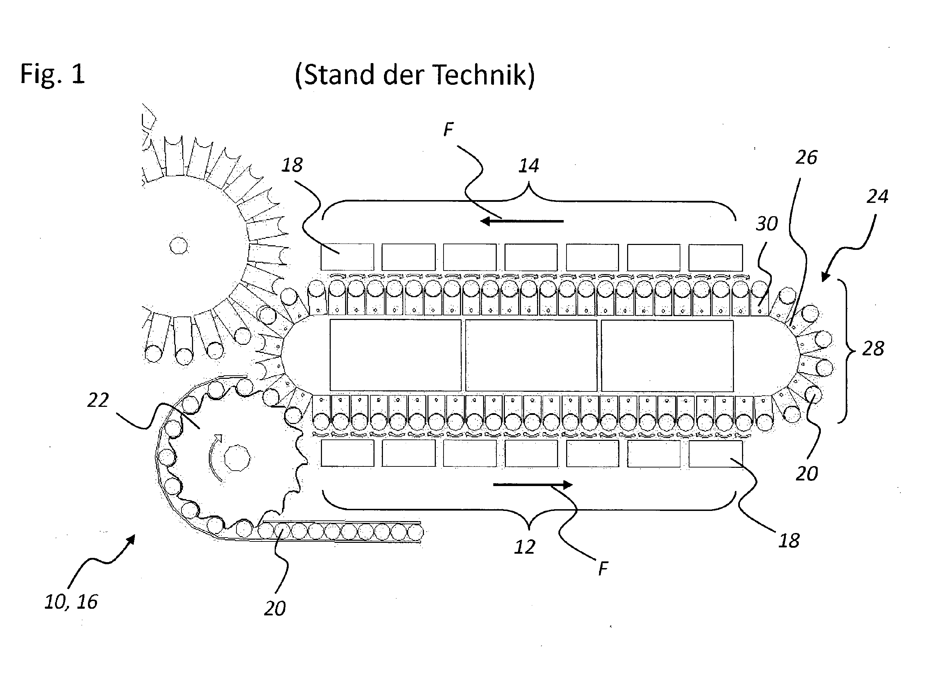

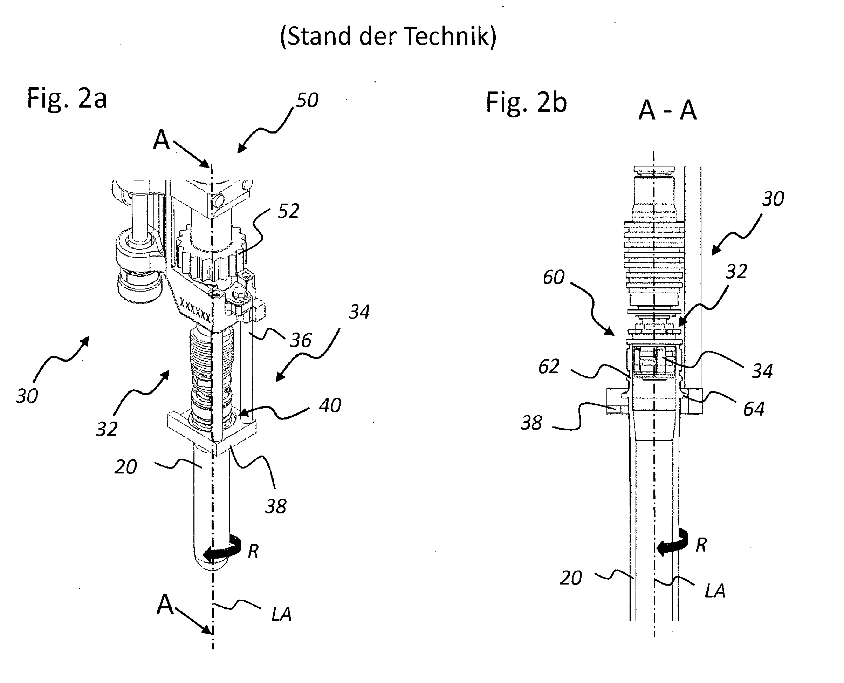

In der **Figur 1** wird eine Heizstrecke 10 eines Ofens 16 dargestellt. In den Ofen 16 werden Vorformlinge 20 über einen Sägezahnstern 22 eingegeben und durchlaufen anschließend die Heizstrecke 10 in Förderbewegung F. Die Vorformlinge 20 werden mittels mehreren Handhabungsvorrichtungen 30 durch den Ofen 16 transportiert. Jede Handhabungsvorrichtung 30 umfasst jeweils mindestens eine Spindel 34 (vgl. Fig. 2a), die drehbar in einem Kettenglied 26 gelagert ist. In der Heizstrecke 10 werden mehrere Kettenglieder 26, mit den darin gelagerten Spindeln 34 verbunden und bilden eine endlos umlaufende Kette 24.

Im Ofen 16 durchlaufen die Vorformlinge 20 zunächst eine erste lineare Heizstrecke 12, in der sie am Umfang gleichmäßig erwärmt werden. Nach einem Umlenkbereich 28 an einem Ende des Ofens 16 werden die Vorformlinge 20 auf einer zweiten geraden Heizstrecke 14 weitergeführt und auf endgültige Temperatur gebracht, bevor diese Vorformlinge 20 in einer Streckblasmaschine (nicht dargestellt) in eine gewünschte Behälterform gebracht werden. In den geraden Bereichen 12, 14 der Heizstrecke 10 sind mehrere Heizkästen 18 angebracht, in denen sich IR-Strahler (nicht dargestellt) und zusätzliche Reflektoren (nicht dargestellt) befinden. Die Reflektoren (nicht dargestellt) sind notwendig, um Strahlungsverluste so gering wie möglich zu halten.

Die **Figur 2a** zeigt eine Perspektivansicht einer Handhabungsvorrichtung 30 für einen Vorformling 20. Die Handhabungsvorrichtung 30 umfasst wenigstens ein Haltemittel 32 und mindestens einen Träger 36. Das Haltemittel 32, welches als Halter 34 beziehungsweise Spindel 34 ausgebildet ist, dient zur Halterung des Vorformlings 20. Am Träger 36 ist senkrecht zur Längsachse LA des Vorformlings 20 eine Abschirmplatte 38 angebracht, die eine Öffnung 40 aufweist, wobei die Öffnung 40 größer ist als der größte Durchmesser des Vorformlings 20.

Während des Transports von mehreren Vorformlingen 20 durch die Heizstrecke 10 (vgl. Fig. 1) werden diese von Handhabungsvorrichtungen 30 gehalten. Geeignete Transportmittel 50 sorgen für die Bewegung der Vorformlinge 20 entlang der Heizstrecke 10. Vorzugsweise werden die Vorformlinge 20 beim Transport durch die Heizstrecke 10

(vgl. Fig. 1) um ihre Längsachse LA über ein jeder Handhabungsvorrichtung 30 zugeordnetes Zahnrad 52 in Rotation R versetzt. Die Zahnräder 52 werden beispielsweise über einen Riemen (nicht dargestellt) angetrieben.

Die **Figur 2b** zeigt einen Querschnitt durch die Handhabungsvorrichtung 30 für einen Vorformlinge 20 entlang einer Schnittlinie A-A aus der Figur 2a. Der Vorformling 20 wird am oben offenen Mündungsbereich 60 über Reibschluss von innen mittels des Haltemittels 32 beziehungsweise des Halters 34 geklemmt. Dadurch wird der Vorformling 20 in seiner Längsachse LA gehalten und über das Zahnrad 52 (vgl. Fig. 2a) in Rotation R versetzt. Um den Mündungsbereich 60 und das Außengewinde 62 des Vorformlings 20 vor ungewünschter Streustrahlung zu schützen istdie Abschirmplatte 38 unterhalb des Tragrings 64 des Vorformlings 20 angeordnet.

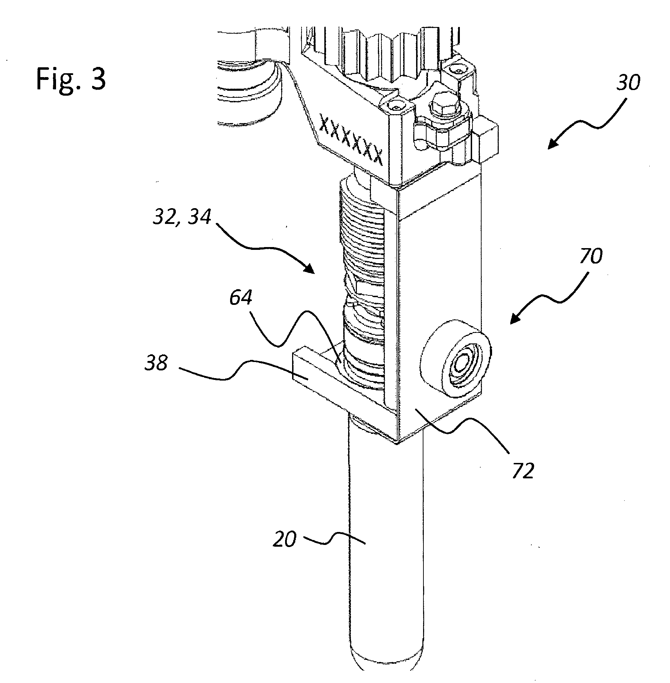

In der **Figur 3** wird eine Perspektivansicht einer Sicherungseinrichtung 70 für einen Vorformling 20 dargestellt. Die Sicherungseinrichtung 70, die an der Handhabungsvorrichtung 30 angebracht ist, soll ein Herabfallen des Vorformlings 20 verhindern. Dazu greift ein sogenannter Sicherungsriegel 72 unter die Abschirmplatte 38. Der Sicherungsriegel 72 untergreift zumindest teilweise berührungslos den Tragring 64 des Vorformlings 20 und verhindert somit ein Herabfallen des Vorformlings 20. Der Vorformling 20 wird, sobald er beginnt vom Haltemittel 32 beziehungsweise Halter 34 zu rutschen, von der direkt unter dem Tragring 64 angeordneten Sicherungseinrichtung 70 abgefangen, um nicht in den Ofen 16 (vgl. Fig. 1) fallen zu können.

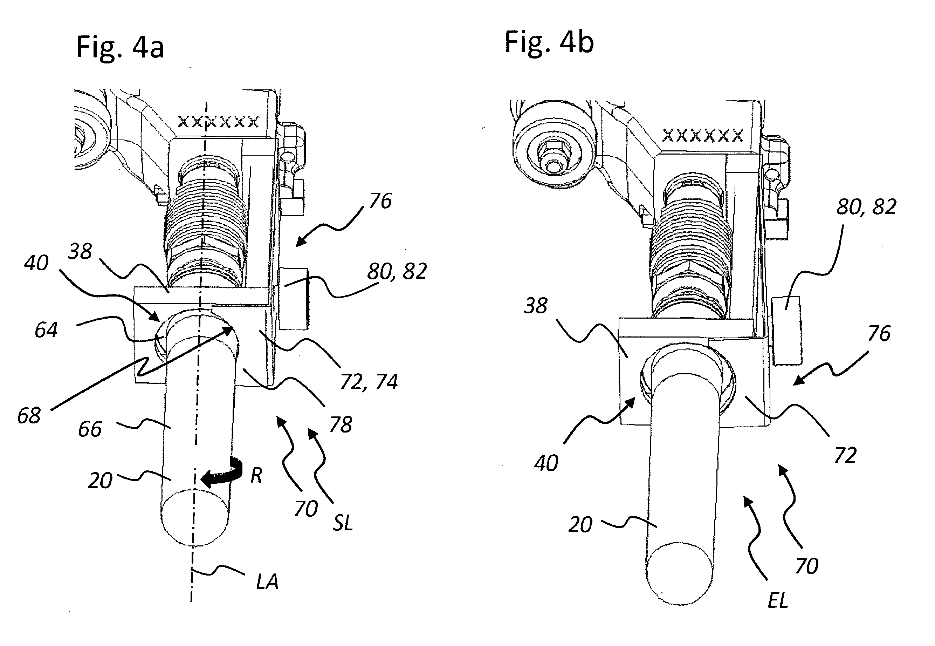

Die **Figur 4a** zeigt eine Perspektivansicht der Sicherungseinrichtung 70 für einen Vorformling 20 in einer Sicherungslage SL. Der Sicherungsriegel 72 der Sicherungseinrichtung 70 besteht aus einem vorgespannten L-förmigen Federblech 74. Das Federblech 74 weist einen vertikalen, federelastischen Bereich 76 und am unteren Ende einen horizontalen Sicherungsabschnitt 78 senkrecht zur Längsachse LA des Vorformlings 20 auf. Der horizontale Sicherungsabschnitt 78 weist vorzugsweise eine reflektierende Oberfläche auf. Des Weiteren befindet sich der horizontale Sicherungsabschnitt 78 in einem Bereich der Außenmantelfläche 66 des Vorformlings 20 und untergreift den Tragring 64, wobei er aber nicht direkt am Vorformling 20 anliegt, da der Vorformling 20 eine Rotationsbewegung R durchführt. Der Sicherungsabschnitt 78 umfasst ein Segment 68 der Außenmantelfläche 66 des Vorformlings 20.

Solange sich der horizontale Sicherungsabschnitt 78 in der Sicherungslage SL befindet, wird das Herabfallen des Vorformlings verhindert, indem seine Rutschbewegung durch den horizontalen Sicherungsabschnitt 78 aufgehalten wird, um den Vorformling 20 trotzdem durch die Heizstrecke 10 (vgl. Fig. 1) zu führen.

Wie in der Beschreibung bereits erwähnt, werden die Vorformlinge 20 an den Übergabestellen durch die Öffnung 40 der Abschirmplatte 38 nach oben beziehungsweise unten bewegt. In diesen Bereichen muss die Sicherungseinrichtung 70 beziehungsweise der Sicherungsriegel 72 entsprechend geöffnet beziehungsweise geschlossen werden. Dies geschieht über mindestens ein Betätigungselement 80.

Das Betätigungselement 80 ist im Ausführungsbeispiel als Kurvenrolle 82 ausgeführt, die am vertikalen, federelastischen Bereich 76 des Sicherungsriegels 72 befestigt ist. Über eine passende Kurvenscheibe (nicht dargestellt) beziehungsweise Kurvenstück (nicht dargestellt) wird der Sicherungsriegel 72 geführt, so dass die Sicherungseinrichtung 70 von der Sicherungslage SL (vgl. Fig. 4a) in eine Entsicherungslage EL (vgl. Fig. 4b) bewegt wird.

In der **Figur 4b** wird eine Perspektivansicht der Sicherungseinrichtung 70 für einen Vorformling 20 in der eben erwähnten Entsicherungslage EL dargestellt. Auch für eine Aufnahme des Vorformlings 20 muss die Sicherungseinrichtung 70 in die Entsicherungslage EL überführt werden, um den Vorformling 20 von unten nach oben durch die Öffnung 40 der Abschirmplatte 38 befördern zu können. Hierzu bewegt sich der mechanisch verstellbare Sicherungsriegel 72 vom Vorformling 20 weg. Der horizontale Bereich 76 des entspannten Sicherungsriegels 72 ist somit beabstandet vom Vorformling 20 angeordnet.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 10: Heizstrecke
- 12: erste Heizstrecke

- 14: zweite Heizstrecke
- 16: Ofen
- 18: Heizkasten
- 20: Vorformlinge
- 21: Bodenbereich
- 22: Sägezahnstern
- 24: Kette
- 26: Kettenglied
- 28: Umlenkbereich
- 30: Handhabungsvorrichtung
- 32: Haltemittel
- 34: Halter, Dorn, Spindel
- 35: Anschlagfläche
- 36: Träger / Abstandsmittel
- 38: Abschirmplatte
- 40: Öffnung
- 50: Transportmittel
- 52: Zahnrad
- 60: Mündungsbereich
- 62: Außengewinde
- 64: Tragring
- 66: Außenmantelfläche
- 68: Segment
- 70: Sicherungseinrichtung
- 72: Sicherungsriegel
- 74: Federblech
- 76: vertikaler, federelastischer Bereich
- 78: horizontaler Sicherungsabschnitt
- 80: Betätigungselement
- 82: Kurvenrolle
- 94: Aufnahmemittel
- 96: Fördereinrichtung
- 98: Zwangsführung
- 100: Lagerung
- 102: Heiztasche
- 104: Kugellager

- 106: Feder
- EL: Entsicherungslage
- SL: Sicherungslage
- F: Förderbewegung
- LA: Längsachse
- R: Rotation

## Patentansprüche

1. Heizstrecke (10) mit mindestens einer Handhabungsvorrichtung (30) zur Halterung von Vorformlingen (20) beim Durchlaufen der Heizstrecke (10), wobei die Vorformlinge (20) einen oberen offenen Mündungsbereich (60) und ein Außengewinde (62) sowie einen unteren geschlossenen Bodenbereich (21) aufweisen, wobei unterhalb des Außengewindes (62) ein Tragring (64) angeordnet ist, und wobei die Handhabungsvorrichtung (30) mindestens ein Haltemittel (32) umfasst, das zumindest teilweise reibschlüssig in den Mündungsbereich (60) der Vorformlinge (20) eingreift, wobei der Handhabungsvorrichtung (30) wenigstens eine mit dem Vorformling (20) in
Kontakt bringbare Sicherungseinrichtung (70) zugeordnet ist, **dadurch gekennzeichnet, dass** die Sicherungseinrichtung (70) unterhalb des Tragrings (64) des Vorformlings (20) angreift,
und einen zwischen einer Sicherungslage (SL) und einer Entsicherungslage (EL) mechanisch, magnetisch, elektromagnetisch oder pneumatisch verstellbaren Sicherungsriegel (72) aufweist, wobei der Sicherungsriegel (72) in der Sicherungslage (SL) den Tragring (64) zumindest teilweise berührungslos untergreift.

2. Heizstrecke (10) nach Anspruch 1, bei der der Sicherungsriegel (72) seine Ruheposition in der Sicherungslage (SL) einnimmt und sich nach Einwirkung eines Betätigungselements (80) in der Entsicherungslage (EL) befindet.

3. Heizstrecke (10) nach Anspruch 1 bis 2, bei der der Sicherungsriegel (72) seine Ruheposition in der Entsicherungslage (EL) einnimmt und sich nach Einwirkung des Betätigungselements (80) in der Sicherungslage (SL) befindet.

4. Heizstrecke (10) nach Anspruch 1 bis 3, bei der der Sicherungsriegel (72) aus einem vorgespannten L-förmigen Federblech (74) besteht, dessen vertikaler, federelastischer Bereich (76) am unteren Ende einen horizontalen Sicherungsabschnitt (78) trägt, der auf Höhe eines Segments (68) der Außenmantelfläche (66) des Vorformlings (20) den Tragring (64) berührungslos untergreift.

5. Heizstrecke (10) nach einem der Ansprüche 1 bis 4, bei der der Sicherungsriegel (72) über mindestens ein mechanisches, pneumatisches, magnetisches oder elektromagnetisches Betätigungselement (80) an den Vorformling (20) zustellbar oder abhebbar ist, wobei das Betätigungselement (80) dem vertikalen Bereich (76) des Sicherungsriegels (72) zugeordnet beziehungsweise an diesem angeordnet ist.

6. Heizstrecke (10) nach Anspruch 5, bei der das Betätigungselement (80) durch eine, mit einer Kurvenscheibe zusammenwirkende Kurvenrolle (82) oder durch die Zusammenwirkung eines zustellbaren Permanent- oder Elektromagneten mit einem Permanentmagneten, einem Eisenkern oder einem sonstigen magnetischen Material gebildet ist.

7. Heizstrecke (10) nach einem der Ansprüche 1 bis 6, bei der eine Anschlagfläche (35) des Haltemittels (32) senkrecht zur Längsachse (LA) des Vorformlings (20) oder zur Drehachse des Vorformlings (20) ist.

## Claims

1. A heating section (10) with at least one handling device (30) for holding preforms (20) while passing through the heating section (10) wherein the preforms (20) comprise an upper, open mouth section (60) and an external thread (62) as well as a lower, closed bottom section (21), wherein a support ring (64) is arranged below the external thread (62), and wherein the handling device (30) comprises at least one holding means (32), which inserts at least partly friction-lockingly into the mouth section (60) of the preforms (20), wherein the handling device (30) is assigned at least one securing means (70), which may be brought into contact with the preform (20), said heating section (10) being **characterized in that** the securing means (70) engages below the support ring (64) of the preform (20) and comprises a securing latch (72), which is mechanically, magnetically, electromagnetically or pneumatically adjustable between a secured position (SL) and an unsecured position (EL), wherein the securing latch (72) at least partly slides underneath the support ring (64) in a contact-free manner in the secured position (SL).

2. The heating section (10) as recited in claim 1 wherein the securing latch (72) takes up its rest position in the secured position (SL) and comes to be in its unsecured position (EL) after the interaction of an actuating element (80).

3. The heating section (10) as recited in claims 1 to 2 wherein the securing latch (72) takes up its rest position in the unsecured position (EL) and comes to be in its secured position (SL) after the interaction of the actuating element (80).

4. The heating section (10) as recited in claims 1 to 3 wherein the securing latch (72) consists of a preloaded, L-shaped spring plate (74), the vertical, spring elastic section (76) of which bears a horizontal securing section (78) at the lower end, which horizontal securing section (78) slides underneath the support ring (64) in a contact-free manner at the level of a segment (68) of the external cover surface (66) of the preform (20).

5. The heating section (10) as recited in one of the claims 1 to 4 wherein the securing latch (72) can be advanced toward or withdrawn from the preform (20) via at least one mechanical, pneumatic, magnetic or electromagnetic actuating element (80) wherein the actuating element (80) is assigned to or arranged at the vertical section (76) of the securing latch (72).

6. The heating section (10) as recited in claim 5 wherein the actuating element (80) is formed by a cam roller (82) interacting with a cam disc or by an advanceable permanent magnet or an advanceable electromagnet interacting with an iron core or with another magnetic material.

7. The heating section (10) as recited in one of the claims 1 to 6 wherein the stop surface (35) of the holding means (32) is perpendicular to the longitudinal axis (LA) of the preform (20) or to the rotation axis of the preform (20).

## Revendications

1. Section de chauffage (10) ayant au moins un dispositif de manipulation (30) pour maintenir des préformes (20) lorsqu'elles parcourent la section de chauffage (10), lesdites préformes (20) présentant une zone de bouche (60) supérieure ouverte et un filet extérieur (62) ainsi qu'une zone de fond (21) inférieure fermée, au-dessous du filet extérieur (62) étant disposée une bague de manutention (64) et ledit dispositif de manipulation (30) comprenant au moins un moyen de maintien (32) qui s'engage, au moins en partie, par friction dans ladite zone de bouche (60) des préformes (20), au dispositif de manipulation (30) étant associé au moins un dispositif de sécurité (70) qui peut être mis en contact avec la préforme (20), **caractérisée par le fait que** ledit dispositif de sécurité (70) se prend au-dessous de ladite bague de manutention (64) de la préforme (20) et présente un verrou de sécurité (72) qui peut être réglé de façon mécanique, magnétique, électromagnétique ou pneumatique entre une position de sécurité (SL) et une position d'enlèvement de la sûreté (EL), ledit verrou de sécurité (72) se prenant, dans la position de sécurité (SL), au moins en partie sans contact sous ladite bague de manutention (64).

2. Section de chauffage (10) selon la revendication 1, dans laquelle ledit verrou de sécurité (72) occupe sa position de repos dans la position de sécurité (SL) et se trouve dans la position d'enlèvement de la sûreté (EL) après l'action d'un élément de commande (80).

3. Section de chauffage (10) selon la revendication 1 à 2, dans laquelle ledit verrou de sécurité (72) occupe sa position de repos dans la position d'enlèvement de la sûreté (EL) et se trouve dans la position de sécurité (SL) après l'action dudit élément de commande (80).

4. Section de chauffage (10) selon la revendication 1 à 3, dans laquelle ledit verrou de sécurité (72) se compose d'une tôle souple en L (74) précontrainte dont la zone verticale (76) élastique comme un ressort porte une portion de sécurité (78) horizontale à l'extrémité inférieure, qui se prend sans contact sous ladite bague de manutention (64) au niveau d'un segment (68) de la surface latérale extérieure (66) de la préforme (20).

5. Section de chauffage (10) selon l'une quelconque des revendications 1 à 4, dans laquelle ledit verrou de sécurité (72) peut être rapproché ou enlevé de la préforme (20) par l'intermédiaire d'au moins un élément de commande (80) mécanique, pneumatique, magnétique ou électromagnétique, ledit élément de commande (80) étant associé à la zone verticale (76) du verrou de sécurité (72) ou bien disposé sur celui-ci.

6. Section de chauffage (10) selon la revendication 5, dans laquelle ledit élément de commande (80) est constitué par un galet de came (82) agissant de concert avec une came ou par la coopération entre un aimant permanent ou électroaimant apte à être approché et un aimant permanent, un noyau de fer ou un autre matériau magnétique.

7. Section de chauffage (10) selon l'une quelconque des revendications 1 à 6, dans laquelle une surface de butée (35) du moyen de maintien (32) est perpendiculaire à l'axe longitudinal (LA) de la préforme (20) ou à l'axe de rotation de la préforme (20).
